# EUROPÄISCHE PATENTSCHRIFT

(11) **EP 0 376 161 B1**
(45) Veröffentlichungstag und Bekanntmachung des Hinweises auf die Patenterteilung: **11.08.1993**
(21) Anmeldenummer: 89123671.3
(22) Anmeldetag: 21.12.1989
(51) Int. Cl.: B23K 9/035

(54) **Verfahren und Hilfsvorrichtung zur Herstellung von Stumpfschweissnähten an gasführenden Rohrleitungen**
Method and auxiliary device for making butt welds at gas pipes
Procédé et dispositif auxiliaire pour la fabrication de joints bout à bout sur des conduites de gaz

(30) Priorität: 24.12.1988 DE 3843921
(43) Veröffentlichungstag der Anmeldung: 04.07.1990
(73) Patentinhaber: Ruhrgas Aktiengesellschaft, 45117 Essen (DE)
(72) Erfinder: Lembser, Gerhard, Dipl.-Ing., D-4018 Langenfeld (DE)
(74) Vertreter: Zenz, Joachim Klaus, Dipl.-Ing.

(56) Entgegenhaltungen:
- DD-A- 82 622
- GB-A- 679 094
- US-A- 1 939 772
- US-A- 2 916 001

## Beschreibung

Die Erfindung betrifft ein Verfahren zum Herstellen einer Stumpfschweißnaht zwischen zwei Rohrenden in einer Gasleitung, wobei der Gasfluß abgeschaltet wird und die Rohrenden unter Bildung eines Spaltes zentrisch aufeinander ausgerichtet werden. Ferner betrifft die Erfindung eine Hilfsvorrichtung zur Herstellung einer Stumpfschweißnaht an einer gasführenden Leitung.

Bei der Verlegung von Gasleitungen, insbesondere von Ferntransportleitungen, die für hohe Drücke geeignet sind (80 bar und mehr), werden die einzelnen Rohrabschnitte mit ihren Rohrenden stumpf zusammengeschweißt, und zwar vorzugsweise unter Bildung einer V-Naht. Die Stumpfschweißung hat den großen Vorteil, daß ihre Festigkeit der der Rohrwandung entspricht (Schweißfaktor 1) und daß keine Unterbrechung und Umlenkungen des Kraftflusses stattfinden.

Stumpfschweißungen finden auch im Reparaturbetrieb Anwendung, jedoch treten hier Schwierigkeiten auf. Es sollte nämlich dafür gesorgt werden, daß im Bereich der Schweißnaht kein zündfähiges Gas/Luft-Gemisch entstehen kann. Voraussetzung hierfür ist, daß zum einen die Absperraraturen tatsächlich gasdicht sind und daß zum anderen keine brennbare Flüssigkeit in der Gasleitung steht. Eine gewisse Sicherheitsvorkehrung kann dadurch getroffen werden, daß man den Bereich der Schweißnaht mit Luft spült. Hierzu werden stromauf und stromab der Schweißnaht Bewetterungsöffnungen vorgesehen. An einer dieser Öffnungen ordnet man einen Ejektor an und saugt Luft durch den Bereich der Schweißnaht hindurch. Dieses Verfahren funktioniert nur dann, wenn die Bewetterungsquerschnitte vergleichsweise groß sind, da nur ein sehr geringer Unterdruck (3 bis 5 mm Wassersäule) innerhalb der Gasleitung herrschen darf. Andernfalls wird der Schweißvorgang gestört.

Besteht keine Möglichkeit für ein wirkungsvolles Spülen mit Luft, so kann man die Gasleitung auch mit einem Inertgas spülen. Dieses Verfahren ist apparativ aufwendig und kostenintensiv.

Schließlich ist man auch schon so vorgegangen, daß man die Gasleitung entgast und anschließend die Bewetterung eingestellt hat. Man nimmt in Kauf, daß es durch Zünden eines Gas/Luft-Gemisches zu einer Deflagration innerhalb des Leitungssystems kommt. Zwar kann der Explossionsdruck die Gasleitung nicht beschädigen, jedoch wird der Schweißvorgang gestört und das Schweißpersonal gefährdet.

Will man die geschilderten Nachteile bei der Herstellung einer V-Naht im Reparaturbetrieb nicht in Kauf nehmen, so kann man auf das sogenannte Überschiebeverfahren ausweichen. Hierbei wird über die miteinander zu verbindenden Rohrenden ein muffenartiges Rohrstück aufgeschoben. Die Enden dieses muffenartigen Rohrstückes werden gegen die Gasleitung abgedichtet, woraufhin man das Rohrstück nach entsprechendem Glühen anschmiedet und mit Überlappungsnähten an der Gasleitung befestigt. Der Vorteil dieses Verfahrens liegt darin, daß die Gasleitung während des Glühens und des Schweißens in Betrieb bleiben kann. Innerhalb der Gasleitung strömt dabei nur sauerstofffreies Gas, so daß kein zündfähiges Gemisch entstehen kann. Allerdings wird die Anwendung des Überschiebeverfahrens mit steigenden Durchmessern und Drücken immer problematischer. Es kommt zu Gefügeveränderungen und Schwierigkeiten bezüglich der Wärmeführung. Vor allen Dingen ergeben sich festigkeitstechnische Nachteile, da nämlich der Kraftfluß von einem Rohrende zum anderen über die Muffe umgelenkt werden muß.

Der Erfindung liegt die Aufgabe zugrunde, eine einfache und ungefährliche Möglichkeit für die Herstellung einer Stumpfschweißnaht im Reparaturbetrieb zu schaffen, ohne daß es erforderlich wird, den Bereich der Schweißnaht gasfrei zu halten.

Zur Lösung dieser Aufgabe ist das Verfahren nach der Erfindung dadurch gekennzeichnet, daß der Spalt zwischen den Rohrenden im Inneren der Gasleitung gasdicht abgedeckt wird, indem ein eigensteifer Abdeckbandabschnitt unter elastischer Verformung durch den Spalt zwischen den Rohrenden ins Innere der Gasleitung hineingedrückt wird, daß sodann der Gasfluß wieder eingeschaltet wird und daß danach die Rohrenden miteinander verschweißt werden.

Aus der US-A-1 939 772 ist es bekannt, bei der Herstellung einer Stumpfschweißnaht einen Spalt zwischen den zu verschweißenden Rohrenden von innen abzudecken. Dadurch soll ein Abtropfen der Schmelze verhindert werden. Außerdem dient die verwendete Abdeckung dazu, die zu verschweißenden Rohrenden zu zentrieren und zu fixieren. Sie muß also ins Rohrinnere eingebracht werden, bevor die Rohrenden aufeinander ausgerichtet werden. Folglich verbietet sich eine Anwendung des bekannten Verfahres auf Reparaturarbeiten, bei denen ein Rohrstück endlicher Länge zwischen zwei Leitungsabschnitt von praktisch unendlicher Länge eingesetzt wird. Gleiches gilt für das Verfahren nach der US-A-2 916 001, bei dem die Schmelze ebenfalls von einem Abdeckstreifen gehalten und geformt wird.

Das erfindungsgemäße Verfahren hingegen ermöglicht die Anwendung von Stumpfschweißnähten auf Reparaturarbeiten. Die Entlüftung des Schweißnahtbereichs erfolgt durch das Wiedereinschalten des Gasflusses.

Das erfindungsgemäße Verfahren vereinigt also im Reparaturbetrieb die Vorteile der Stumpfschweißnaht mit den Vorteilen des Überschiebeverfahrens, daß nämlich bei gasführender Leitung geschweißt werden kann. Die innenliegende Abdichtung läßt einerseits keine Luft in die Gasleitung eintreten, so daß kein zündfähiges Gas/Luft-Gemisch entstehen kann, und verhindert andererseits den Austritt von Gas an der Schweißstelle, so daß es nicht zu Behinderungen oder gar Gefährdungen des Schweißers kommen kann. Da gasförmiges Medium weder in der einen, noch in der anderen Richtung an der eigentlichen Schweißstelle vorbeiströmt, ergeben sich keinerlei negative Einflüsse auf die Wurzelnahtschweißung. Bei alledem bleibt der gesamte Bereich der Schweißnaht voll und ganz zugänglich.

Der Abdeckbandabschnitt faltet sich fortschreitend in Längsrichtung, während er den Spalt passiert, und spreizt sich dann wieder im Inneren der Gasleitung, wobei er aufgrund seiner Elastizität selbsttätig an die Innenwand der Gasleitung gedrückt wird, und zwar unterhalb des Spaltes. In montiertem Zustand deckt er diesen vollständig ab. Dabei kann eine gewisse Überlappung der Bandenden dadurch erzeilt werden, daß man das Abdeckband mit entsprechender Überlänge abschneidet. Der Einbauvorgang gestaltet sich also extrem einfach. Die Steifheit des Abdeckbandes gewährt eine hinreichende statische Festigkeit während des Schweißvorgangs. Da das Abdeckband den Spalt überdeckt, nimmt die Dichtwirkung mit steigendem Innendruck zu.

Vorzugsweise wird der Abdeckbandabschnitt über eine dem Spalt entsprechende Breite von den zu verschweißenden Rohrenden beim Verschweißen radial beabstandet gehalten. Dadurch ist sichergestellt, daß der Abdeckbandabschnitt das Schweißen der Nahtwurzel nicht behindern kann.

Um eine möglichst gute Anlage des Abdeckbandabschnittes an der Innenwand der Gasleitung zu gewährleisten, ist es vorteilhaft, daß die Innenflächen der zu verschweißenden Rohrenden vor dem Einsetzen des Abdeckbandabschnittes gereinigt werden.

Unter Umständen kann es vorteilhaft sein, die Haftwirkung des Abdeckbandabschnittes im Inneren der Rohrenden durch zusätzliche Maßnahmen zu verstärken. Hierzu schlägt die Erfindung vor, daß an den Innenflächen der zu verschweißenden Rohrenden vor dem Einsetzen des Abdeckbandabschnittes ein Haftmittel angebracht wird. Es kann sich dabei um ein Klebenmittel handeln. Auch kann ein permanentmagnetisches Mittel Verwendung finden, welches auf den metallischen Abdeckbandabschnitt einwirkt oder dessen Magnetkraft - sofern vorhanden - unterstützt.

Vorzugsweise wird der ins Innere der Gasleitung hineingedrückte Abdeckbandabschnitt mindestens im Bereich des Spaltes mit einer feuerfesten Beschichtung versehen. Er kann dann durch den Schweißvorgang nicht in Mitleidenschaft gezogen werden. Am besten bringt man die Beschichtung als plastischen Überzug auf, der anschließend rasch aushärtet.

Die erfindungsgemäße Hilfsvorrichtung zum Herstellen einer Stumpschweißnaht zwischen zwei Rohrenden, die zwischen sich einen Spalt bilden, weist einen Abdeckbandabschnitt auf, der zum Abdecken des Spaltes von innen her dient. Eine solche Hilfsvorrichtung ist aus der US-A-1 939 772 bekannt, wobei der Abdeckbandabschnitt, wie erwähnt, ein Einfließen der Schmelze ins Rohrinnere verhindert und gleichzeitig die zu verschweißenden Rohrenden zentriert und fixiert. Für Reparaturarbeiten ist die bekannte Hilfsvorrichtung nicht geeignet. Hingegen ist die erfindungsgemäße Hilfsvorrichtung hierfür vorgesehen. Sie ist dadurch gekennzeichnet, daß der Abdeckbandabschnitt aus eigensteifem Material mit einer Elastizität hergestellt ist, die ein Hindurchdrücken des Abdeckbandabschnittes durch den Spalt von außen nach innen sowie eine gasdichte Abdeckung des Spaltes zuläßt, wobei der Abdeckbandabschnitt in dem dem Spalt zugeordneten Bereich eine rinnenartige Vertiefung aufweist, die vorzugsweise breiter als der Spalt ausgebildet ist. Der Abdeckbandabschnitt kann also im Reparaturbetrieb nach dem Ausrichten und Fixieren des einzusetzenden Rohrabschnittes mühelos montiert werden, woraufhin man die Gasleitung wieder in Betrieb nimmt und die Stumpfschweißung, bei der es sich vorzugsweise um eine V-Naht handelt, durchführt.

Die rinnenartige Vertiefung des Abdeckbandabschnitts dient zum einen dazu, hinreichend gasfreien Raum (Ringraum) für den Elektrodenabbrand zu schaffen und Störungen während des Schweißens vorzubeugen. Sie erhöht zum anderen die Eigensteifigkeit des Abdeckbandes und bietet die Möglichkeit, die anschließenden Wandbereiche in unmontiertem Zustand und im Querschnitt gesehen leicht stumpfwinklig gegeneinander auszurichten, damit sich in montiertem Zustand selbsttätig eine besonders satte Anlage an der Innenwand der Gasleitung ergibt. Die rinnenförmige Vertiefung kann verschiedene Querschnittsformen haben, beispielsweise leicht U-förmig, kreisbogenförmig, rechteckig oder omegaförmig. Vorzugsweise ist die rinnenförmige Vertiefung breiter als der abzudeckende Spalt.

Vorzugsweise besteht der Abdeckbandabschnitt aus Federstahl. Dieses Material besitzt eine ausreichende Eigensteifigkeit, um sich fest an die Innenwand der Gasleitung anzulegen, verbunden mit ausreichender Elastizität, um unter Längsfaltung durch den Spalt hindurchgedrückt zu werden. Auch ist Federstahl weitgehend hitzebeständig. In diesem Zusammenhang ist es vorteilhaft, daß der Abdeckbandabschnitt in dem dem Spalt zugeordneten Bereich eine feuerfeste Beschichtung trägt, um jeglicher Beeinträchtigung durch den Schweißvorgang vorzubeugen. Die Beschichtung wird vorzugsweise durch den Spalt zwischen den Rohrenden auf den eingebauten Abdeckbandabschnitt aufgetragen. Man verwendet dabei am besten ein plastisches, rasch aushärtendes und hoch hitzebeständiges Material. Unter Umständen kann eine genügend elastische Beschichtung auch bereits vor der Montage auf den Abdeckbandabschnitt aufgebracht werden.

Wie erwähnt, drückt sich der Abdeckbandabschnitt selbsttätig gegen die Innenwand der Gasleitung. Um die Dichtwirkung weiter zu unterstützen, schlägt die Erfindung vor, daß die seitlichen Randbereiche des Abdeckbandabschnitts permanentmagnetisch sind. Neben der Steigerung der Abdichtwirkung wird auf diese Weise sichergestellt, daß der Abdeckbandabschnitt ständig (im Anlagen-Piping) bzw. bis zur nächsten Betriebsmolchung (im Pipeline-Betrieb) an Ort und Stelle verbleibt und keinerlei Störwirkungen hervorruft. Die Temperatureinflüsse durch die Schweißung sind so gering, daß keine Aufhebung der Magnetwirkung erfolgt. Die permanentmagnetische Wirkung des Abdeckbandabschnittes kann erfindungsgemäß ergänzt oder ersetzt werden durch in den zu verschweißenden Rohrenden befestigbare permanentmagnetische Haltebandabschnitt zum Festlegen des Abdeckbandabschnittes.

Nach einem besonders vorteilhaften Merkmal ist der Abdeckbandabschnitt in dem dem Spalt zugeordneten Bereich mit mindestens einer Montagehilfe in Form eines den Spalt durchgreifenden Vorsprungs versehen. Dieser Vorsprung dient beispielsweise dazu, das vordere Ende des Abdeckbandabschnittes durch den Spalt zwischen den miteinander zu verschweißenden Rohrenden hindurchzudrücken. Sodann wird dieses Vorderende mittels der Montagehilfe festgehalten, während man den Rest des Abdichtbandes unter Benutzung eines beliebigen Werkzeugs, beispielsweise eines Schraubenziehers, durch den Spalt hindurchdrückt. Das Abdeckband wird auf diese Weise gezwungen, sich von Anfang an und fortlaufend an die Innenwand der Gasleitung anzulegen. Will man auf den Einsatz zusätzlicher Werkzeuge verzichtet, so besetzt man die gesamte Länge des Abdeckbandabschnittes mit entsprechenden Vorsprüngen. Letzere werden nach dem Einbau des Abdichtbandabschnittes entfernt. Daher weist die Montagehilfe erfindungsgemäß eine Sollbruchstelle auf. Sie ist vorzugsweise als mit dem Abdeckbandabschnitt punktverschweißter Stift ausgebildet. Alternativ kann die Montagehilfe erfindungsgemäß unter Zwischenschaltung eines Magneten lösbar an dem Abdeckbandabschnitt befestigt sein. In der Regel wird man die Anordnung so treffen, daß der Magnet das freie Ende der Montagehilfe bildet.

Die Erfindung wird im folgenden anhand bevorzugter Ausführungsbeispiele im Zusammenhang mit der beiliegenden Zeichnung näher erläutert. Die Zeichnung zeigt in:
- Fig. 1: eine Draufsicht auf einen Teil eines erfindungsgemäßen Abdeckbandabschnittes;
- Fig. 2: den Abdeckbandabschnitt nach Fig. 1 in eingebautem Zustand;
- Fig. 3: die Einzelheit A aus Fig. 2;
- Fig. 4A bis 4C: unterschiedliche Querschnitte für den erfindungsgemäßen Abdeckbandabschnitt;
- Fig. 5: in einem Schnitt entsprechend dem nach Fig. 2 eine abgewandelte Ausführungsform.

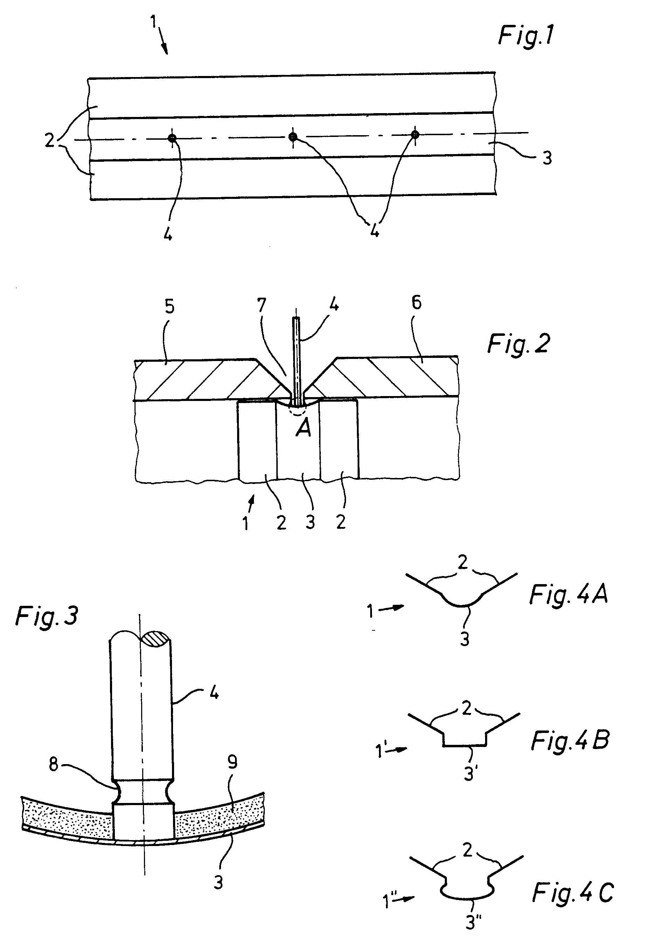

Nach Fig. 1 besteht ein erfindungsgemäßer Abdeckbandabschnitt 1 in unmontiertem Zustand aus im wesentlichen ebenen Randbereichen 2 und einer mittleren längslaufenden Vertiefung 3. Über der Länge des Abdeckbandabschnittes 1 sind Montagehilfe 4 angeordnet. Diese sind mit dem aus Federstahl bestehenden Abdeckbandabschnitt 1 punktverschweißt.

Fig. 2 zeigt zwei miteinander zu verschweißende Rohrenden 5 und 6 einer Ferngasleitung. Dabei handelt es sich um eine Reparaturschweißung, bei der die Rohrenden 5 und 6 stumpf aneinander verschweißt werden sollen, und zwar, wie dargestellt, unter Anwendung einer V-Naht.

Bei dem Verfahren nach der Erfindung wird der Abdeckbandabschnitt 1 auf den im wesentlichen V-förmigen Spalt 7 zwischen den beiden Rohrenden 5 und 6 aufgelegt und sodann mittels der Montagehilfen 4 durch den Spalt hindurchgedrückt. Dabei faltet sich der Abdeckbandabschnitt in Längsrichtung und spreizt sich wieder zu seiner normalen Breite, sobald er sich in ausreichender Länge im Inneren der Gasleitung befindet. Die Montagehilfe am vordersten Ende des Abdeckbandabschnittes 1 dient außerdem dazu, letzteren an die Innenwand der Gasleitung heranzuziehen, während der Rest des Abdeckbandabschnittes durch den Spalt 7 hindurchgedrückt wird. In der Einbauposition bietet sich schließlich das in Fig. 2 dargestellte Bild, d.h., der Abdeckbandabschnitt 1 liegt mit seinen Randbereichen 2 satt an den vorher gereinigten Innenflächen der zu verschweißenden Rohrenden 5 und 6 an, während die mittlere Vertiefung 3 den Spalt 7 von innen her überdeckt.

Wie aus Fig. 3 deutlich zu ersehen, weist die Montagehilfe 4 eine Sollbruchstelle 8 auf, an der sie zu ihrer Entfernung abgebrochen wird, sobald der Abdeckbandabschnitt 1 seine Einbauposition nach Fig. 2 erreicht hat. Mindestens die Vertiefung 3 ist mit einer feuerfesten Beschichtung 9 versehen, die im vorliegenden Falle nach der Montage des Abdeckbandabschnittes 1 durch den Spalt 7 hindurch aufgetragen worden ist.

Die Randbereiche 2 des Abdeckbandabschnittes 1 sind permanentmagnetisch, um die abdichtende Haftung an den Innenflächen der Rohrenden 5 und 6 zu erhöhen und außerdem eine ortsfeste Positionierung des Abdeckbandes zu bewirken.

Sobald in der Position nach Fig. 2 die Montagehilfen 4 abgebrochen worden sind und der Gasfluß wieder eingeschaltet worden ist, wird die V-Naht in üblicher Weise geschweißt. Der gesamte Schweißbereich ist frei zugänglich, und es kommt zu keinerlei Behinderungen, Gefährdungen oder Beschädigungen durch die Strömung gasförmigen Mediums in der einen oder anderen Richtung durch den Schweißbereich.

Fig. 4A zeigt den Abdeckbandabschnitt 1 im Querschnitt. Die Vertiefung 3 ist bogenförmig ausgebildet, wobei sich die Randbereiche 2, stumpfwinklig gegeneinander ausgerichtet, seitlich anschließen. Im Einbauzustand gelangen die Randbereiche 2 automatisch in eine gemeinsame Ebene.

Bei der Ausführungsform nach Fig. 4B ist die Vertiefung 3′ rechteckig ausgebildet, während die Vertiefung 3˝ nach Fig. 4C die Form eines Omega besitzt.

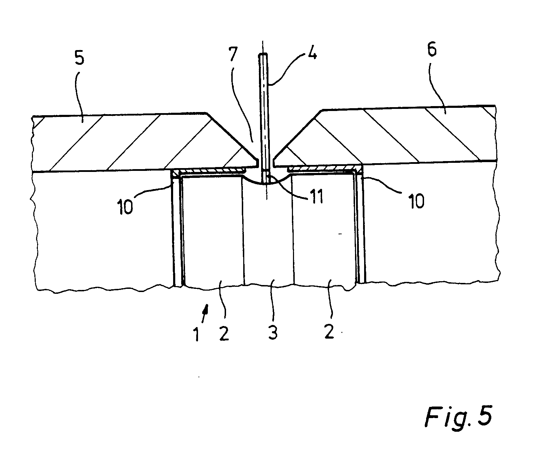

Bei der Ausführungsform nach Fig. 5 sind die Rohrenden 5 und 6 auf ihren Innenflächen mit Haltebandabschnitten 10 versehen worden. Letztere besitzen permanentmagnetische Eigenschaften und dienen dazu, den Abdeckbandabschnitt 1 zu positionieren und festzuhalten. Ggf. kann darauf verzichtet werden, den Abdeckbandabschnitt selbst permanentmagnetisch auszubilden.

Die Haltebandabschnitte 10 werden eingebracht, bevor man die Rohrenden 5 und 6 aufeinander zentriert. Ggf. reicht die permanentmagnetische Kraft zur Befestigung der Haltebandabschnitte aus. Andernfalls kann zusätzlich ein Klebemittel angewendet werden.

Bei der Ausführungsform nach Fig. 5 trägt die stabförmige Montagehilfe 4 am unteren Ende einen Magneten 11, der eine ausreichend feste und gleichzeitig lösbare Verbindung mit dem Abdeckbandabschnitt 1 herzustellen vermag.

## Patentansprüche

1. Verfahren zum Herstellen einer Stumpfschweißnaht zwischen zwei Rohrenden (5, 6) in einer Gasleitung, wobei der Gasfluß abgeschaltet wird und die Rohrenden (5, 6) unter Bildung eines Spaltes (7) zentrisch aufeinander ausgerichtet werden,
**dadurch gekennzeichnet,**
daß der Spalt (7) zwischen den Rohrenden (5, 6) im Inneren der Gasleitung gasdicht abgedeckt wird, indem ein eigensteifer Abdeckbandabschnitt (1) unter elastischer Verformung durch den Spalt (7) zwischen den Rohrenden (5, 6) ins Innere der Gasleitung hineingedrückt wird, daß sodann der Gasfluß wieder eingeschaltet wird und daß danach die Rohrenden miteinander verschweißt werden.

2. Verfahren nach Anspruch 1, dadurch gekennzeichnet, daß an den Innenflächen der zu verschweißenden Rohrenden (5, 6) vor dem Einsetzen des Abdeckbandabschnitts (1) ein Haftmittel (10) angebracht wird.

3. Verfahren nach Anspruch 1 oder 2, dadurch gekennzeichnet, daß der ins Innere der Gasleitung hineingedrückte Abdeckbandabschnitt (1) mindestens im Bereich des Spaltes (7) mit einer feuerfesten Beschichtung (9) versehen wird.

4. Hilfsvorrichtung zum Herstellen einer Stumpfschweißnaht zwischen zwei Rohrenden (5, 6), die zwischen sich einen Spalt (7) bilden, mit einem Abdeckbandabschnitt (1) zum Abdecken des Spaltes (7) von innen her,
**dadurch gekennzeichnet,**
daß der Abdeckbandabschnitt (1) aus eigensteifem Material mit einer Elastizität hergestellt ist, die ein Hindurchdrücken des Abdeckbandabschnitts (1) durch den Spalt (7) von außén nach innen sowie eine gasdichte Abdeckung des Spaltes (7) zuläßt, wobei der Abdeckbandabschnitt (1) in dem dem Spalt (7) zugeordneten Bereich eine rinnenförmige Vertiefung (3) aufweist, die vorzugsweise breiter als der Spalt (7) ausgebildet ist.

5. Hilfsvorrichtung nach Anspruch 4, dadurch gekennzeichnet, daß der Abdeckbandabschnitt (1) aus Federstahl besteht und vorzugsweise in dem dem Spalt (7) zugeordneten Bereich eine feuerfeste Beschichtung (9) trägt.

6. Hilfsvorrichtung nach Anspruch 4 oder 5, dadurch gekennzeichnet, daß die seitlichen Randbereiche (2) des Abdeckbandabschnitts (1) permanentmagnetisch sind.

7. Hilfsvorrichtung nach einem der Ansprüche 4 bis 6, gekennzeichnet durch in den zu verschweißenden Rohrenden (5, 6) befestigte permanentmagnetische Haltebandabschnitte (10) zum Festlegen des Abdeckbandabschnitts (1).

8. Hilfsvorrichtung nach einem der Ansprüche 4 bis 7, dadurch gekennzeichnet, daß der Abdeckbandabschnitt (1) in dem dem Spalt (7) zugeordneten Bereich mit mindestens einer Montagehilfe (4) in Form eines den Spalt durchgreifenden Vorsprungs versehen ist.

## Claims

1. A method of making a butt weld between two pipe ends (5),(6) in a gas pipeline, with the gas flow being interrupted and the pipe ends (5),(6) being centered and aligned to form a gap (7),
**characterised in that**
the gap (7) between the pipe ends (5),(6) is sealed gas-tight on the inside of the gas pipeline by inserting an intrinsically rigid liner strip (1) under elastic deformation through the gap (7) between the pipe ends (5),(6) into the inside of the gas pipeline, that gas flow is then restored and that the pipe ends are then welded together.

2. A method according to Claim 1, characterised in that prior to insertion of the liner strip 1 an adhesive agent 10 is applied to the inside surfaces of the pipe ends (5),(6) to be welded together.

3. A method according to Claim 1 or Claim 2, characterised in that the liner strip (1) inserted into the gas pipeline has a refractory coating (9) in an area covering at least the width of the gap (7).

4. Back-up apparatus for making a butt weld between two pipe ends (5),(6) which form a gap (7) between them, using a liner strip (1) to cover the gap (7) from the inside,
**characterised in that**
the liner strip (1) is made of an intrinsically rigid material which displays an elasticity allowing the liner strip (1) to be inserted through the gap (7) from the outside to the inside of the pipe and to seal the gap (7) gas-tight, with the liner strip (1) having a groove-like recess (3) in the area of the gap (7) which is preferably wider than the gap (7).

5. Back-up apparatus according to Claim 4, characterised in that the liner strip (1) is made of spring steel and that the area covering the gap (7) is preferably equipped with a refractory coating (9).

6. Back-up apparatus according to Claim 4 or Claim 5, characterised in that the side areas (2) of the liner strip (1) are permanently magnetic.

7. Back-up apparatus according to any one of Claims 4 to 6, characterised in that permanently magnetic retaining strips (10) are mounted on the inside of the pipe ends (5), (6) to be welded to position the liner strip (1).

8. Back-up apparatus according to any one of Claims 4 to 7, characterised in that in the area of the gap (7) the liner strip (1) is equipped with at least one mounting aid (4) in the form of a projecting part protruding from the gap (7).

## Revendications

1. Méthode pour la réalisation d'une soudure bout à bout entre deux bouts (5,6) d'une canalisation à gaz, le flux de gaz étant interrompu et les bouts (5,6) étant centrés et alignés pour former une fente (7), caractérisée par le fait que la fente (7) entre les bouts (5,6) est d'abord rendue étanche au gaz, à l'intérieur de la conduite à gaz, par l'introduction dans la conduite à gaz, sous déformation élastique, d'un feuillard de couverture (1) d'une rigidité intrinsèque à travers la fente (7) entre les bouts (5,6), que le flux de gaz est ensuite rétabli et que, enfin, lesdits bouts sont soudés.

2. Méthode selon la revendication 1, caractérisée par le fait qu'un agent adhésif (10) est appliqué sur la surface intérieure des bouts (5, 6) à souder avant l'introduction du feuillard de couverture (1).

3. Méthode selon l'une des revendications 1 ou 2, caractérisée par le fait que le feuillard de couverture (1), inséré dans la conduite à gaz, présente, au moins au niveau de la fente (7), un revêtement réfractaire (9).

4. Dispositif auxiliaire pour la réalisation d'une soudure bout à bout entre deux bouts (5, 6) d'une conduite formant entre eux une fente (7), avec un feuillard de couverture (1) pour couvrir la fente (7) par l'intérieur, caractérisé par le fait que le feuillard de couverture (1) est fabriqué en matériau d'une rigidité intrinsèque, présentant une élasticité permettant d'insérer, de l'extérieur vers l'intérieur, le feuillard de couverture (1) à travers la fente (7) et de rendre la fente (7) étanche au gaz, le feuillard de couverture (1) présentant, au niveau de la fente (7), un creux annulaire (3) qui est, lui, de préférence plus large que la fente (7).

5. Dispositif auxiliaire selon la revendication 4, caractérisé par le fait que le feuillard de couverture (1) est en acier à ressorts et qu'il est de préférence muni, au niveau de la fente (7), d'un revêtement réfractaire.

6. Dispositif auxiliaire selon l'une des revendications 4 ou 5, caractérisé par le fait que les parties latérales (2) du feuillard de couverture (1) sont en permanence magnétiques.

7. Dispositif auxiliaire selon l'une des revendications 4 à 6, caractérisé par le fait que des feuillards de maintien (10) étant en permanence magnétiques sont montés à l'intérieur des bouts (5, 6) à être soudés pour positionner le feuillard de couverture (1).

8. Dispositif auxiliaire selon l'une des revendications 4 à 7, caractérisé par le fait que le feuillard de couverture (1) est muni, au niveau de la fente (7), d'au moins une aide au montage (4) en forme d'une pièce en saillie à travers ladite fente.
